# EUROPEAN PATENT APPLICATION

(11) **EP 4 664 098 A1**
(43) Date of publication of application: **17.12.2025**
(21) Application number: 23894680.0
(22) Date of filing: 26.12.2023
(51) Int. Cl.: G01N 21/88, G06N 20/00, G06T 7/00, G06V 10/778

(54) **APPEARANCE INSPECTION DEVICE AND METHOD FOR GENERATING APPEARANCE INSPECTION IDENTIFIER**

(71) Applicant: Astemo, Ltd., Tokyo 100-0004 (JP)
(72) Inventor: SEKI, Takateru, Hitachinaka-shi, Ibaraki 312-8503 (JP); ONOZUKA, Hideaki, Hitachinaka-shi, Ibaraki 312-8503 (JP); ICHINOSE, Masatoshi, Hitachinaka-shi, Ibaraki 312-8503 (JP); WATANABE, Takashi, Hitachinaka-shi, Ibaraki 312-8503 (JP)
(74) Representative: Hoffmann Eitle
(86) International application number: PCT/JP2023/046549
(87) International publication number: WO 2024/111678

(57) **Abstract**

Provided are a visual inspection device with an improved determination accuracy of inspection and a method of generating a visual inspection discriminator. The visual inspection device includes: a storage unit configured to store, after generation of, based on a defective product image which includes a defect and which is to be determined as a defective product in visual inspection, at least one pseudo image which is close to a determination criterion between defective products and non-defective products in the visual inspection, a boundary learning result obtained by machine learning of a boundary between non-defective products and defective products through use of a pair of the defective product image and the at least one pseudo image or a pair of two pseudo images; and an inspection unit configured to inspect a surface of an object to be inspected based on the boundary learning result.

## Description

### TECHNICAL FIELD

The present invention relates to a visual inspection device and a method of generating a visual inspection discriminator.

### BACKGROUND ART

In Patent Literature 1, there is disclosed a visual inspection device for determining whether an object to be inspected is non-defective or defective by generating one pseudo image.

### CITATION LIST

### PATENT LITERATURE

PTL 1: JP 2011-214903 A

### SUMMARY OF INVENTION

### TECHNICAL PROBLEM

However, in the visual inspection device of Patent Literature 1, a person is required to determine whether an extracted pseudo image is non-defective or defective, and hence there is a problem in that it is quite difficult to apply the visual inspection device to deep learning in which feature amounts are used in a black-box manner.

One object of the present invention is to provide a visual inspection device with an improved determination accuracy of inspection and a method of generating a visual inspection discriminator.

### SOLUTION TO PROBLEM

According to one embodiment of the present invention, there is provided a visual inspection device including: a storage unit configured to store, after generation of, based on a defective product image which includes a defect and which is to be determined as a defective product in visual inspection, at least one pseudo image which is close to a determination criterion between defective products and non-defective products in the visual inspection, a boundary learning result obtained by machine learning of a boundary between non-defective products and defective products through use of a pair of the defective product image and the at least one pseudo image or a pair of two pseudo images; and an inspection unit configured to inspect a surface of an object to be inspected based on the boundary learning result.

Thus, according to the one embodiment of the present invention, it is possible to achieve both of highly efficient learning man-hours and improvement of detection accuracy.

### BRIEF DESCRIPTION OF DRAWINGS

Fig. 1 is an overall diagram of a visual inspection device of a first embodiment of the present invention.
Fig. 2 is a flow chart for illustrating a flow of creating a boundary machine learning result in the first embodiment.
Fig. 3 is an explanatory first time chart of an operation of creating the boundary machine learning result in the first embodiment.
Fig. 4 is an explanatory second time chart of the operation of creating the boundary machine learning result in the first embodiment.
Fig. 5 is an explanatory third time chart of the operation of creating the boundary machine learning result in the first embodiment.
Fig. 6 is an explanatory fourth time chart of the operation of creating the boundary machine learning result in the first embodiment.
Fig. 7 is a flow chart for illustrating a flow of creating a boundary machine learning result in a second embodiment of the present invention.
Fig. 8 is an explanatory fourth time chart of an operation of creating the boundary machine learning result in the second embodiment.
Fig. 9 is a flow chart for illustrating a flow of creating a boundary machine learning result in a third embodiment of the present invention.
Fig. 10 is an explanatory fourth time chart of an operation of creating the boundary machine learning result in the third embodiment.
Fig. 11 is an overall diagram of a visual inspection device of a fourth embodiment of the present invention.
Fig. 12 is a flow chart for illustrating a flow of creating a boundary machine learning result in the fourth embodiment.
Fig. 13 is an explanatory third time chart of an operation of creating the boundary machine learning result in the fourth embodiment.
Fig. 14 is an explanatory fourth time chart of the operation of creating the boundary machine learning result in the fourth embodiment.

### DESCRIPTION OF EMBODIMENTS

### [First Embodiment]

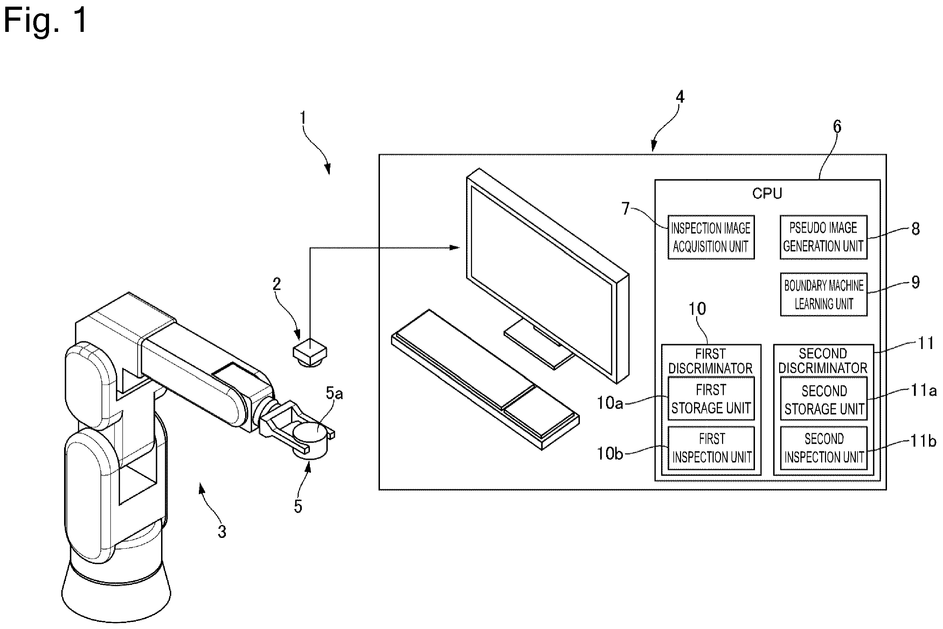

Fig. 1 is an overall diagram of a visual inspection device of a first embodiment of the present invention.

A visual inspection device 1 of the first embodiment includes a camera 2, a robot 3, and a computer 4.

The camera 2 picks up an image of a crown surface 5a of a piston (an object to be inspected) 5.

The crown surface 5a of the piston 5 includes a machined surface and a cast surface which are greatly different from each other in surface properties.

The robot 3 changes a posture of the piston 5 relative to the camera 2.

The computer 4 is, for example, a personal computer, and includes a CPU 6.

The CPU 6 includes an inspection image acquisition unit 7, a pseudo image generation unit 8, a boundary machine learning unit 9, a first discriminator (visual inspection discriminator) 10 for inspection of the crown surface of the piston, which includes a first storage unit (storage unit) 10a and a first inspection unit (inspection unit) 10b, and a second discriminator 11 for boundary machine learning, which includes a second storage unit 11a and a second inspection unit 11b.

This machine learning is, for example, learning which uses a neural network, and, in the first embodiment, deep learning being a multilayered version of the neural network is employed.

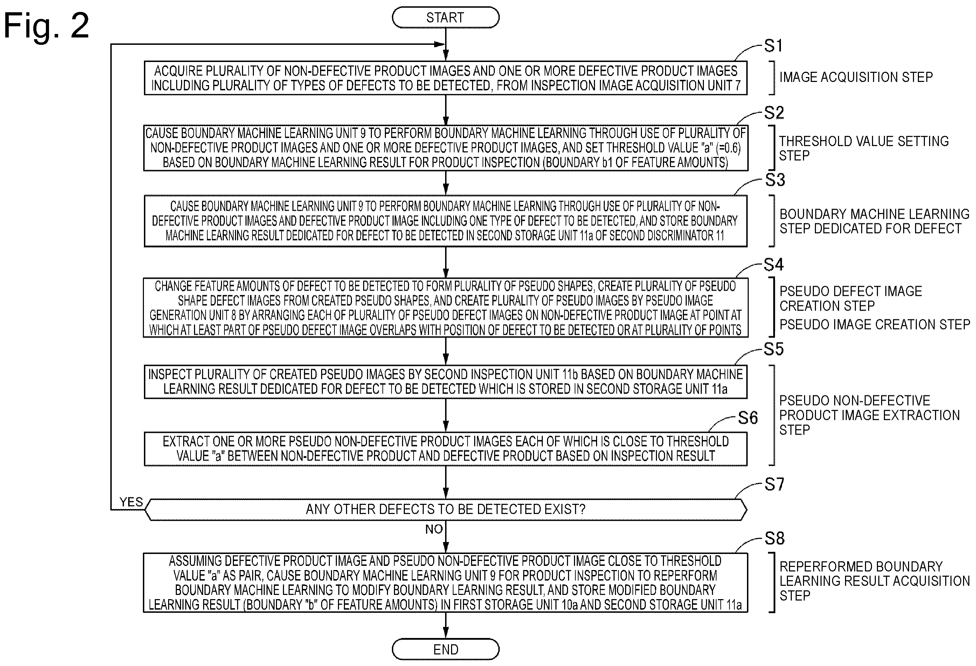

Fig. 2 is a flow chart for illustrating a flow of creating a boundary machine learning result in the first embodiment.

In Step S1, a plurality of non-defective product images and one or more defective product images including a plurality of types of defects to be detected are acquired from the inspection image acquisition unit 7 (image acquisition step).

In Step S2, through use of the plurality of non-defective product images and one or more defective product images to be detected, the boundary machine learning unit 9 is caused to perform boundary machine learning, and a threshold value (determination criterion) "a" (=0.6) is set based on a boundary machine learning result for product inspection (boundary b1 of feature amounts) (threshold value setting step).

In Step S3, through use of the plurality of non-defective product images and a defective product image including one type of defect to be detected, the boundary machine learning unit 9 is caused to perform the boundary machine learning, and a boundary machine learning result dedicated for a defect to be detected is stored in the second storage unit 11a of the second discriminator 11 (boundary machine learning step dedicated for a defect).

In Step S4, feature amounts of a defect image to be detected are changed to create a plurality of pseudo shapes, a plurality of pseudo defect images are created from the created pseudo shapes, and the pseudo image generation unit 8 creates a plurality of pseudo images by arranging each of the plurality of pseudo defect images on a non-defective product image at a point at which at least a part of the pseudo defect image overlaps with a position of the defect to be detected or at a plurality of points of the position of the defect to be detected (pseudo defect image creation and acquisition step and pseudo image creation step).

In Step S5, the plurality of created pseudo images are inspected by the second inspection unit 11b based on the boundary machine learning result dedicated for a defect to be inspected which is stored in the second storage unit 11a (pseudo non-defective product image extraction step).

In Step S6, one or more pseudo non-defective product images each of which is close to the threshold value "a" between the non-defective product and the defective product are extracted based on the inspection result (pseudo non-defective product image extraction step).

In Step S7, whether there exist any other defects to be detected is examined.

When there exist any other defects to be detected, the process returns to Step S1, and when there exists no defect to be detected, the process proceeds to Step 8.

As a result, when there newly exist any other defects to be detected (predetermined trigger), the boundary machine learning result can be updated in a timely manner.

In Step S8, assuming a defective product image and a pseudo non-defective product image close to the threshold value "a" as a pair, the boundary machine learning unit 9 for product inspection is caused to reperform boundary machine learning to modify the boundary learning result, and the modified boundary learning result (boundary "b" of feature amounts) are stored in the first storage unit 10a and the second storage unit 11a (reperformed boundary learning result acquisition step).

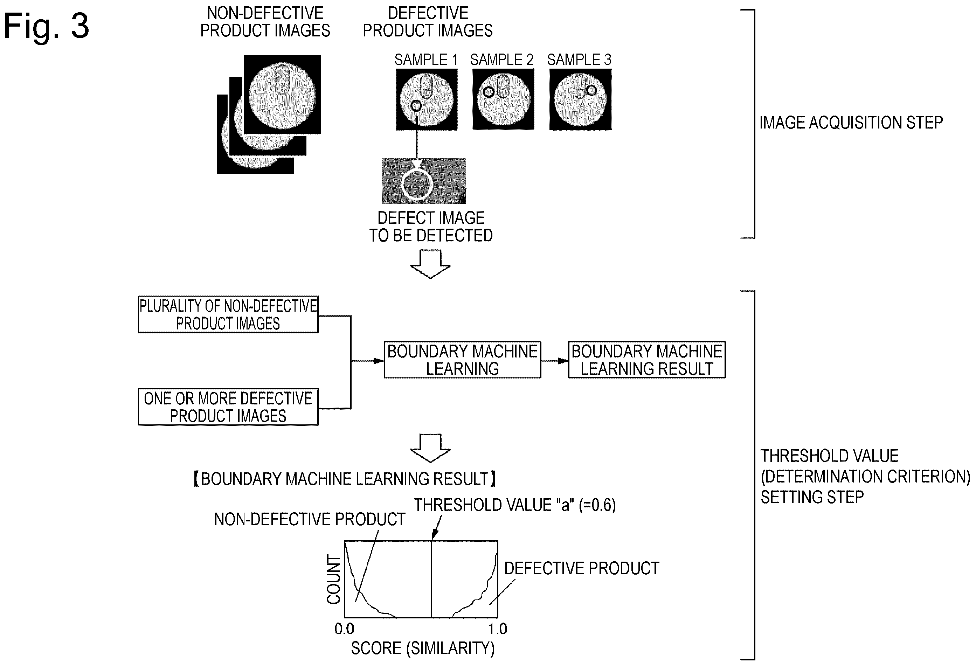

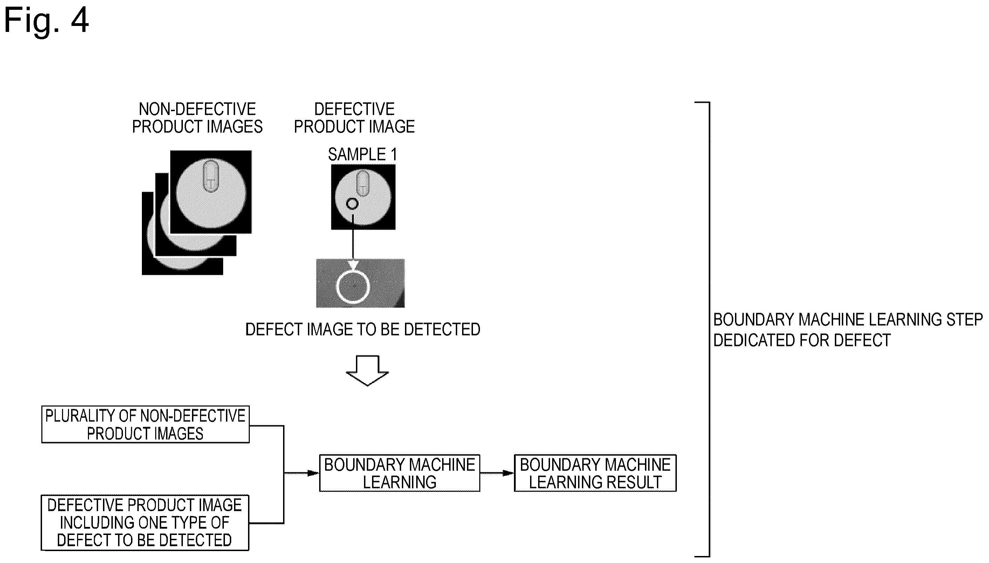

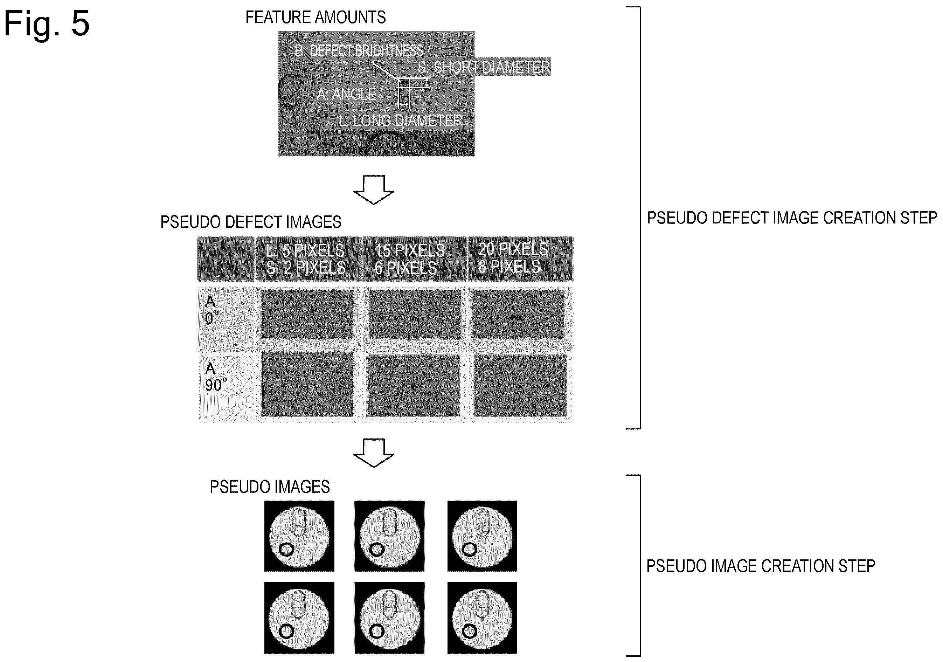

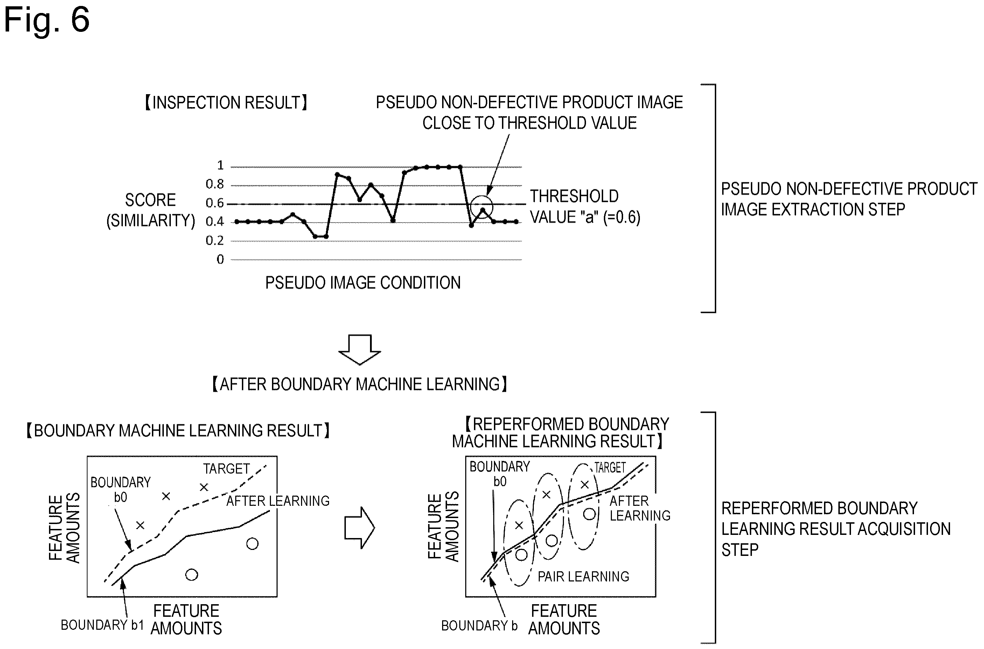

Fig. 3 is an explanatory first time chart of an operation of creating the boundary machine learning result in the first embodiment. Fig. 4 is an explanatory second time chart of the operation of creating the boundary machine learning result in the first embodiment. Fig. 5 is an explanatory third time chart of the operation of creating the boundary machine learning result in the first embodiment. Fig. 6 is an explanatory fourth time chart of the operation of creating the boundary machine learning result in the first embodiment.

In the image acquisition step, a plurality of non-defective product images and one or more defective product images including a plurality of types of defects to be detected are acquired from the inspection image acquisition unit 7.

In the threshold value (determination criterion) setting step, the boundary machine learning is performed through use of the plurality of non-defective product image and the one or more defective product images including the plurality of types of defects to be detected, which are acquired from the inspection image acquisition unit 7, to thereby acquire the boundary machine learning result.

Further, the acquired boundary machine learning result is used to classify images into non-defective products and defective products by a score (similarity) to set a threshold value "a" between non-defective products and defective products. For example, the threshold value "a" is set to 0.6.

In the boundary machine learning step dedicated for a defect, through use of the plurality of non-defective product images and a defective product image including one type of defect to be detected, the boundary machine learning unit 9 is caused to perform the boundary machine learning, and the boundary machine learning result dedicated for a defect to be detected is stored in the second storage unit 11a of the second discriminator 11.

Fig. 5 is an explanatory third time chart of the operation of creating the boundary machine learning result in the first embodiment.

In the pseudo defect image step, feature amounts (angle A, defect brightness B, long diameter L, and short diameter S) of a defect of a defect image to be detected are changed, to thereby create pseudo defect images having a plurality of pseudo shapes.

In Fig. 5, only six types of the pseudo defect images are illustrated, but for example, about 20 types of the pseudo defect images are created.

In the pseudo image creation step, the pseudo image generation unit 8 creates a plurality of pseudo images by arranging each of the plurality of created pseudo defect images on the non-defective product image at a point at which at least a part of the pseudo defect image overlaps with a position of a defect of the defect image to be detected or at a plurality of points.

A plurality of pseudo shapes are created by changing feature amounts (angle A, defect brightness B, long diameter L, and short diameter S) of a defect of the defect image to be detected, and hence a plurality of pseudo images created from the plurality of pseudo shapes can easily be created.

Further, a plurality of pseudo images are created by arranging each of the plurality of created pseudo defect images on the non-defective product image at a point at which at least a part of the pseudo defect image overlaps with a position of a defect of the defect image to be detected or at a plurality of points, and accordingly, feature amounts of only the defect portion excluding a background and positional information can be extracted, with the result that pairs with higher accuracy can be found.

Fig. 6 is an explanatory fourth time chart of the operation of creating the boundary machine learning result in the first embodiment.

In the pseudo non-defective product image extraction step being a step of generating at least one pseudo image which is close to the threshold value "a" (=0.6) between the non-defective product and the defective product, the plurality of created pseudo images are inspected by the second inspection unit 11b based on the boundary machine learning result dedicated for a defect to be inspected, which is stored in the second storage unit 11a, the inspection result is used to classify images into non-defective products and defective products by the score (similarity), and one or more pseudo non-defective product images each of which is close to the threshold value "a" (=0.6) between non-defective products and defective products are extracted.

In the reperformed boundary learning result acquisition step being a step of obtaining the visual inspection discriminator, assuming the defect image and the pseudo non-defective product image close to the threshold value "a" (=0.6) as a pair, the boundary machine learning unit 9 for product inspection is caused to reperform boundary machine learning to modify the boundary learning result, and the modified boundary learning result (boundary "b" of feature amounts) is stored in the first storage unit 10a and the second storage unit 11a.

As a result, a boundary b0 as a target and the boundary "b" obtained through the boundary learning result can be made almost identical to each other, the boundary learning result can be constructed with high efficiency by causing the first storage unit 10a to store the modified boundary learning result, and an accuracy of inspection for determining whether the crown surface 5a of the piston 5 is a non-defective product or a defective product, which is performed by the first discriminator 10, can be improved.

Next, actions and effects of the first embodiment are described.

In the first embodiment, actions and effects as described below are achieved.
(1) The first storage unit 10a of the first discriminator 10 of the visual inspection device 1 stores a boundary learning result (boundary "b" of feature amounts) obtained through the boundary machine learning by the boundary machine learning unit 9, assuming a defect image and a pseudo non-defective product image close to the threshold value "a" as a pair. The inspection unit 10b of the first discriminator 10 inspects the crown surface 5a of the piston 5 based on the stored boundary learning result (boundary "b" of feature amounts).
   Accordingly, the boundary b0 as a target and the boundary "b" obtained through the boundary learning result can be made almost identical to each other, the boundary learning result can be constructed with high efficiency, and an accuracy of inspection for determining whether the crown surface 5a of the piston 5 is a non-defective product or a defective product, which is performed by the first discriminator 10, can be improved.
(2) When there newly exist any other defects to be detected, the boundary machine learning is reperformed.
   Accordingly, the boundary machine learning result can be updated in a timely manner.
(3) Feature amounts (angle A, defect brightness B, long diameter L, and short diameter S) of a defect of a defect image to be detected are changed, to thereby create pseudo defect images having a plurality of pseudo shapes.
   Accordingly, a plurality of pseudo defect images created from the plurality of pseudo shapes can easily be created.
(4) A plurality of pseudo images are created by arranging each of the plurality of pseudo defect images created from a plurality of pseudo shapes on the non-defective product image at a point at which at least a part of the pseudo defect image overlaps with a position of a defect of the defect image to be detected or at a plurality of points.

Accordingly, feature amounts of only the defect excluding a background and positional information can be extracted, and hence pairs with higher accuracy can be found.

### [Second Embodiment]

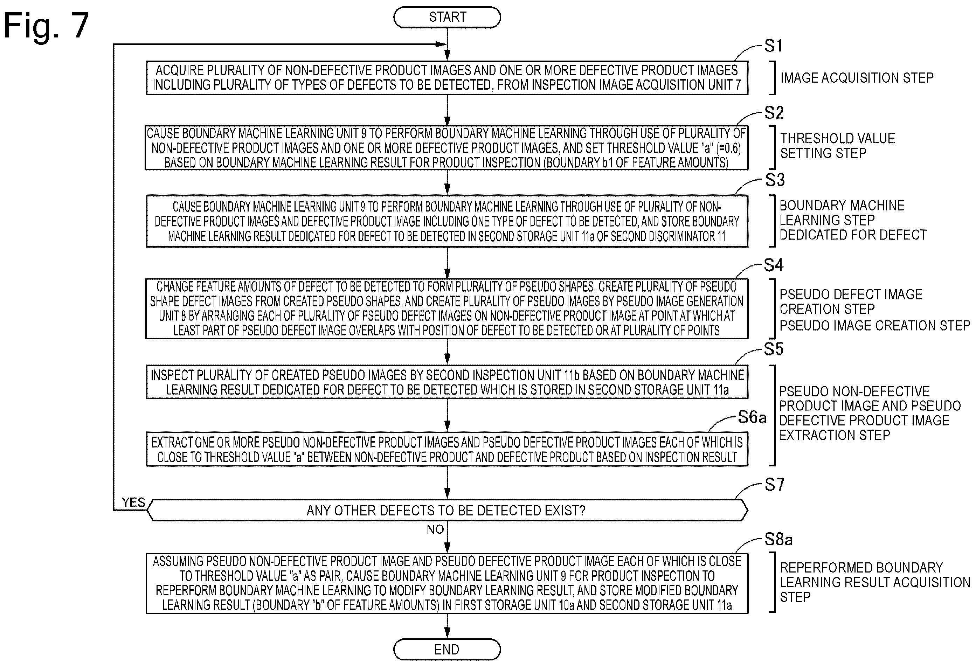

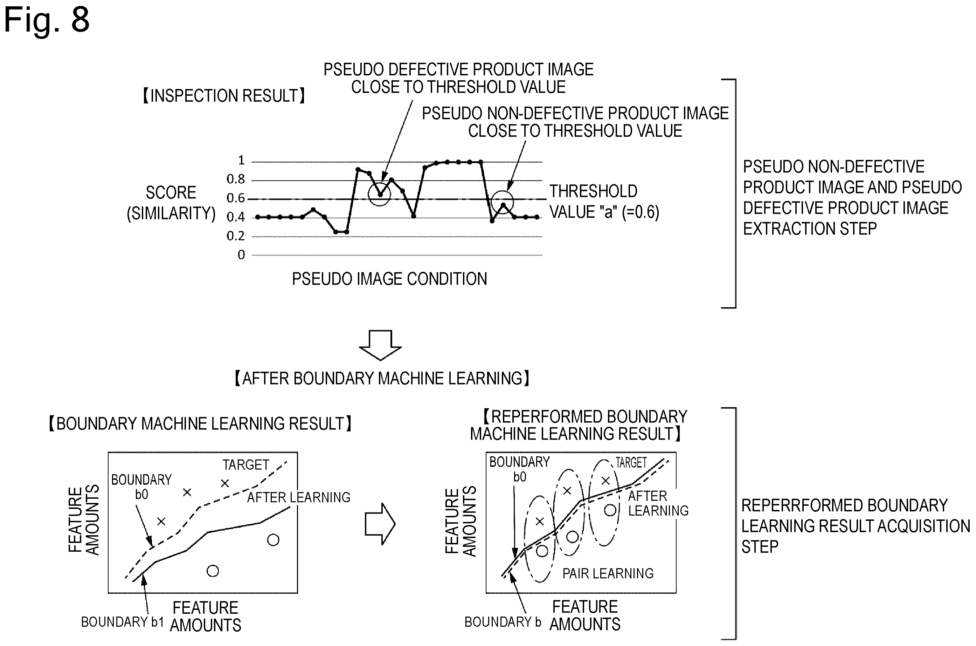

Fig. 7 is a flow chart for illustrating a flow of creating the boundary machine learning result in a second embodiment of the present invention, and Fig. 8 is an explanatory fourth time chart of an operation of creating the boundary machine learning result in the second embodiment.

In the first embodiment, assuming the defect image and the pseudo non-defective product image close to the threshold value "a" as a pair, the boundary machine learning unit 9 for product inspection is caused to reperform boundary machine learning to modify the boundary learning result, and the modified boundary learning result (boundary "b" of feature amounts) is stored in the first storage unit 10a and the second storage unit 11a, but in the second embodiment, assuming a pseudo defect image close to the threshold value "a" and a pseudo non-defective product image close to the threshold value "a" as a pair, the boundary machine learning unit 9 for product inspection is caused to reperform boundary machine learning to modify the boundary learning result, and the modified boundary learning result (boundary "b" of feature amounts) is stored in the first storage unit 10a and the second storage unit 11a.

That is, as illustrated in Fig. 7 and Fig. 8, instead of the pseudo non-defective product image extraction step in the first embodiment, a pseudo non-defective product image and pseudo defective product image extraction step is employed.

Other configurations are the same as those in the first embodiment, and hence the same components are denoted by the same reference symbols, and descriptions thereof are omitted.

Accordingly, in the second embodiment, the same actions and effects as in the first embodiment are achieved.

### [Third Embodiment]

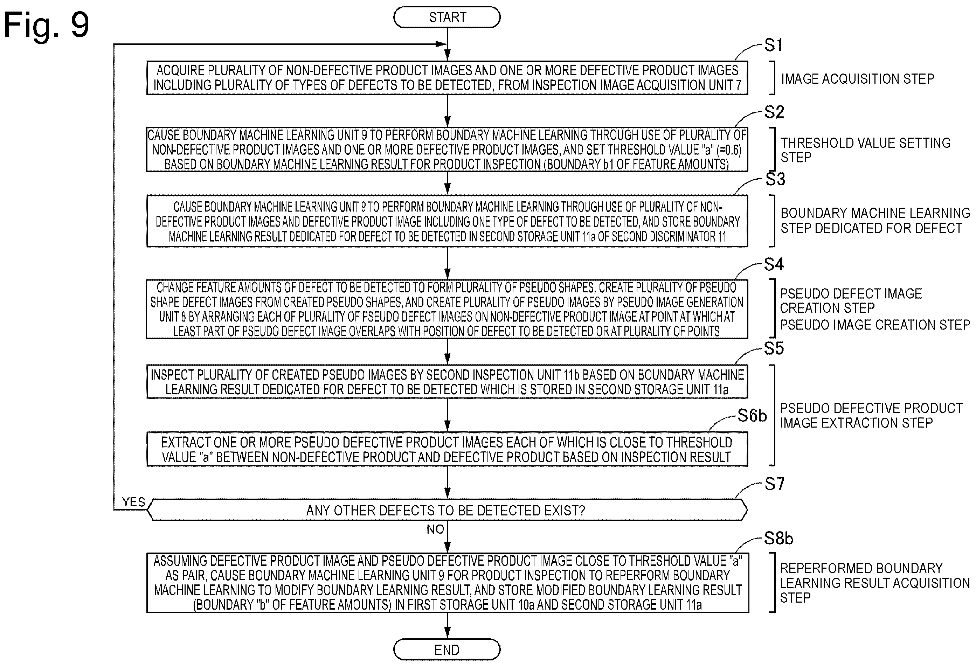

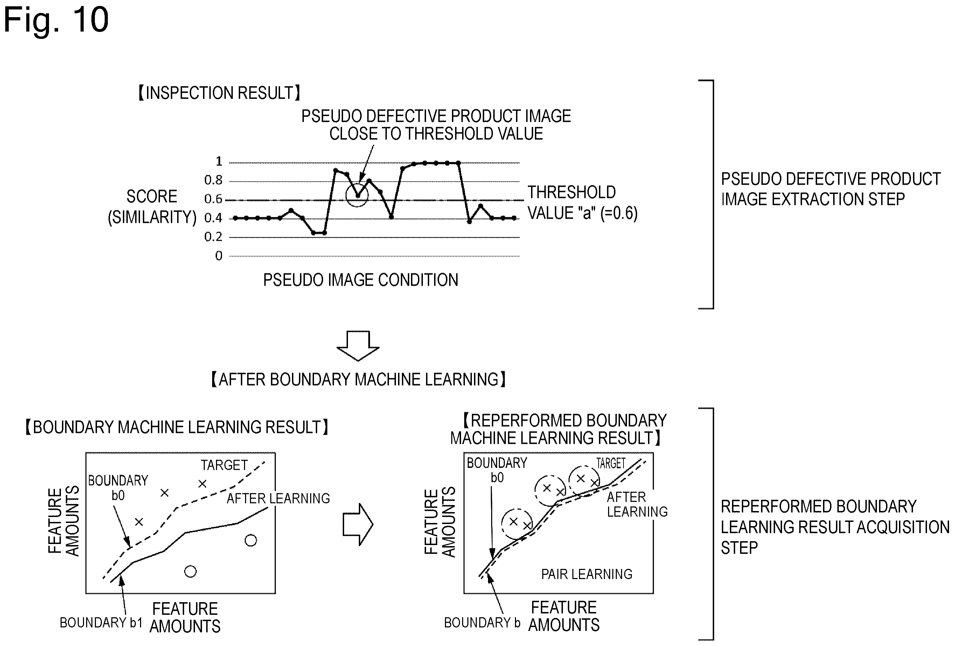

Fig. 9 is a flow chart for illustrating a flow of creating the boundary machine learning result in a third embodiment of the present invention, and Fig. 10 is an explanatory fourth time chart of an operation of creating the boundary machine learning result in the third embodiment.

In the first embodiment, assuming the defective product image and the pseudo non-defective product image close to the threshold value "a" as a pair, the boundary machine learning unit 9 for product inspection is caused to reperform boundary machine learning to modify the boundary learning result, and the modified boundary learning result (boundary "b" of feature amounts) is stored in the first storage unit 10a and the second storage unit 11a, but in the third embodiment, assuming a defective product image and a pseudo defective product image close to the threshold value "a" as a pair, the boundary machine learning unit 9 for product inspection is caused to reperform boundary machine learning to modify the boundary learning result, and the modified boundary learning result (boundary "b" of feature amounts) is stored in the first storage unit 10a and the second storage unit 11a.

That is, as illustrated in Fig. 9 and Fig. 10, instead of the pseudo non-defective product image extraction step in the first embodiment, a pseudo defective product image extraction step is employed.

Other configurations are the same as those in the first embodiment, and hence the same components are denoted by the same reference symbols, and descriptions thereof are omitted.

Accordingly, in the third embodiment, the same actions and effects as in the first embodiment are achieved.

### [Fourth Embodiment]

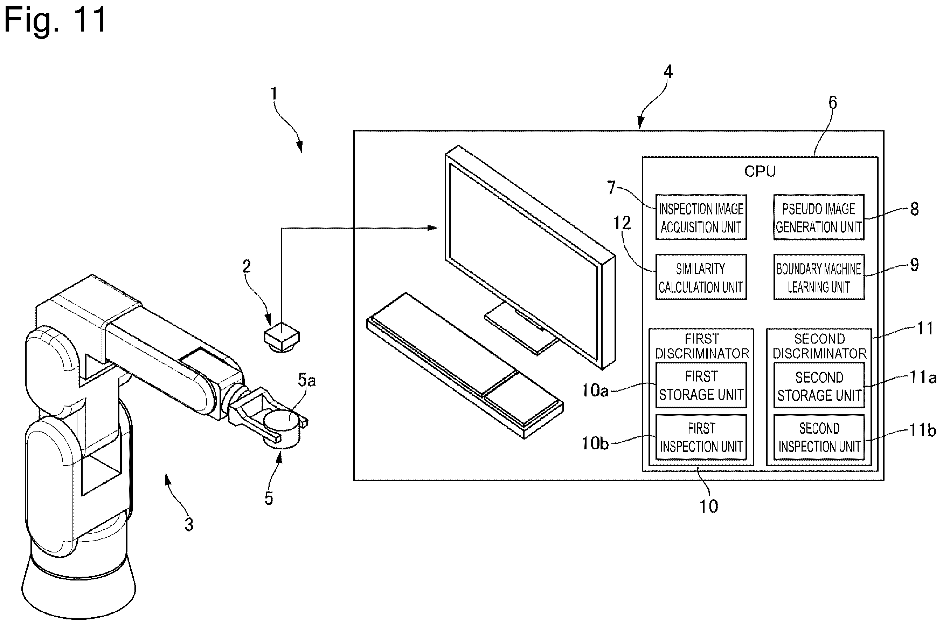

Fig. 11 is an overall diagram of a visual inspection device of a fourth embodiment of the present invention.

In the visual inspection device of the fourth embodiment, a similarity calculation unit 12 is further added to the visual inspection device of the first embodiment.

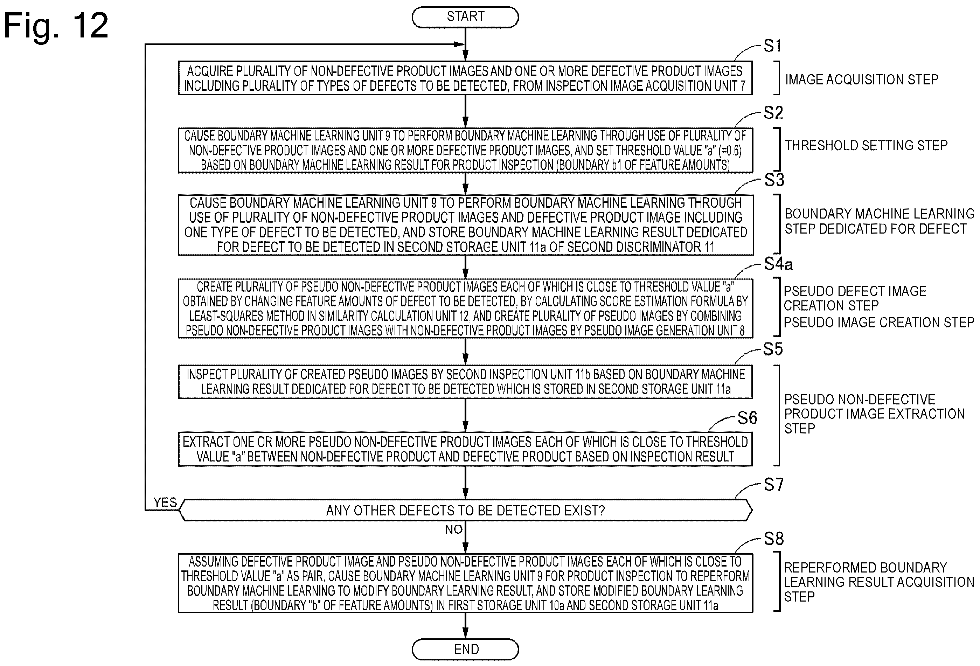

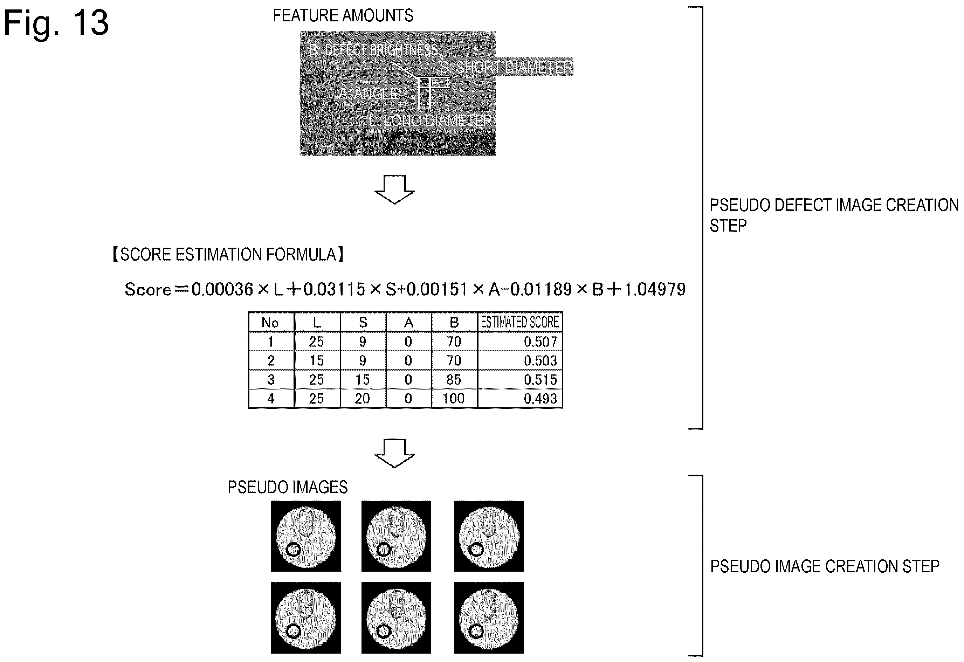

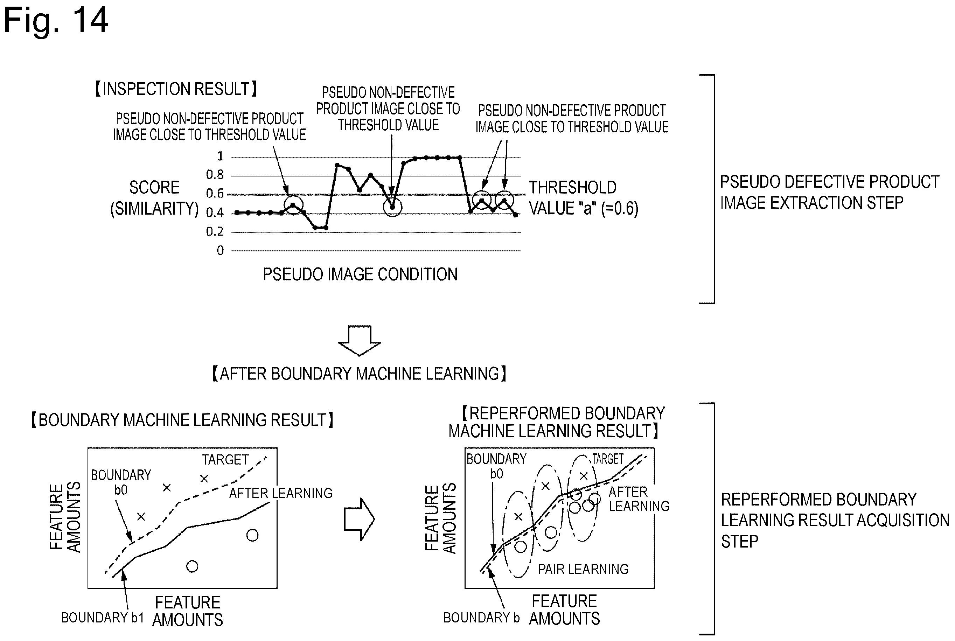

Fig. 12 is a flow chart for illustrating a flow of creating a boundary machine learning result in the fourth embodiment. Fig. 13 is an explanatory third time chart of an operation of creating the boundary machine learning result in the fourth embodiment. Fig. 14 is an explanatory fourth time chart of the operation of creating the boundary machine learning result in the fourth embodiment.

As illustrated in Step S4a being a pseudo defect image creation step and a pseudo image creation step of Fig. 12, the similarity calculation unit 12 creates a plurality of pseudo non-defective product images each of which is close to the threshold value "a" obtained by changing feature amounts of the defect image to be detected, by calculating a score estimation formula by the least-squares method.

Specifically, as illustrated in Fig. 13, the plurality of pseudo non-defective product images each of which is close to the threshold value "a" are created by changing feature amounts (angle A, defect brightness B, long diameter L, and short diameter S) and using the score estimation formula, and the pseudo image generation unit 8 creates a plurality of pseudo images by arranging each of the plurality of pseudo non-defective product images on the non-defective product image at a point at which at least a part of the pseudo non-defective product image overlaps with a position of a defect of the defect image or at a plurality of points. In Fig. 13, only four types of the pseudo non-defect product images are illustrated, but for example, about 20 types of the pseudo non-defect product images are created.

That is, in the first embodiment, the defective product image and the pseudo non-defective product image close to the threshold value "a" are assumed as a pair, but in the fourth embodiment, as illustrated in Fig. 14, one defective product image and a plurality of pseudo non-defective product images each of which is close to the threshold value "a" are assumed as a pair.

Other configurations are the same as those in the first embodiment, and hence the same components are denoted by the same reference symbols, and descriptions thereof are omitted.

Next, actions and effects of the fourth embodiment are described.

In the fourth embodiment, in addition to the actions and effects of the first embodiment, the following actions and effects are achieved.
(1) One defective product image and a plurality of pseudo non-defective product images each of which is close to the threshold value are assumed as a pair.

Accordingly, the setting accuracy of the boundary learning result (boundary "b" of feature amounts) can be improved.

### [Other Embodiments]

The embodiments of the present invention have been described above. However, the specific configurations of the present invention are not limited to the configurations described in the embodiments. A modification in design and the like without departing from the scope of the gist of the invention are also encompassed in the present invention.

For example, an object to be inspected is not limited to the piston, and the machine learning is not limited to deep learning being a multilayered version of a neural network.

Further, the posture control unit performs the posture change of the piston by the robot, but the posture control unit may perform the posture change by changing the position of the camera.

In the fourth embodiment, one defective product image and a plurality of pseudo non-defective product images each of which is close to the threshold value are assumed as a pair, but this configuration can also be applied to the pseudo images in the second embodiment and the third embodiment.

The present invention is not limited to the embodiments described above, and encompasses various modification examples. For example, the embodiments have described the present invention in detail for the ease of understanding, and the present invention is not necessarily limited to a mode that includes all of the configurations described above. A part of the configuration of one embodiment may be replaced with the configuration of another embodiment, and the configuration of one embodiment may be used in combination with the configuration of another embodiment. In each embodiment, another configuration may be added to, deleted from, or replace a part of the configuration of the embodiment.

The present application claims a priority based on Japanese Patent Application No. 2022-186211 filed on November 22, 2022. All disclosed contents including Specification, Scope of Claims, Drawings, and Abstract of Japanese Patent Application No. 2022-186211 filed on November 22, 2022 are incorporated herein by reference in their entirety.

### REFERENCE SIGNS LIST

1 visual inspection device, 10 first discriminator (visual inspection discriminator), 10a first storage unit (storage unit), 10b first inspection unit (inspection unit), 12 similarity calculation unit, "a" threshold value (determination criterion), "b" boundary (boundary learning result)

## Claims

1. A visual inspection device for discriminating between a non-defective product and a defective product by inspecting a surface of an object to be inspected, the visual inspection device comprising:
a storage unit configured to store, after generation of, based on a defective product image which includes a defect and which is to be determined as a defective product in visual inspection, at least one pseudo image which is close to a determination criterion between defective products and non-defective products in the visual inspection, a boundary learning result obtained by machine learning of a boundary between non-defective products and defective products through use of a pair of the defective product image and the at least one pseudo image or a pair of two pseudo images; and
an inspection unit configured to inspect the surface of the object to be inspected, based on the boundary learning result.

2. The visual inspection device according to claim 1,
wherein the at least one pseudo image is a pseudo non-defective product image generated to be close to the determination criterion between defective products and non-defective products in the visual inspection, and to be determined as a non-defective product in the visual inspection, and
wherein the boundary learning result is obtained through machine learning using the defective product image and the pseudo non-defective product image.

3. The visual inspection device according to claim 1, wherein the at least one pseudo image is a pseudo defective product image which is generated to be closer to the determination criterion than the defective product image but to be determined as a defective product in the visual inspection, and a pseudo non-defective product image which is generated to be determined as a non-defective product in the visual inspection.

4. The visual inspection device according to claim 1, further comprising a similarity calculation unit configured to create a plurality of the pseudo images, extract a feature of the defect in accordance with the plurality of the pseudo images, and calculate a similarity between the plurality of the pseudo images and the determination criterion between defective products and non-defective products in the visual inspection,
wherein the machine learning is performed through use of a specific pseudo image which is selected in accordance with the similarity from the plurality of the pseudo images.

5. The visual inspection device according to claim 1, wherein the visual inspection device is configured to enable the boundary machine learning result to be updated in response to a predetermined trigger.

6. The visual inspection device according to claim 1, wherein the at least one pseudo image is generated by generating a pseudo shape by changing a feature amount of the defect, and arranging the pseudo shape in an image.

7. The visual inspection device according to claim 6, wherein the at least one pseudo image is generated by arranging the pseudo shape at a point of a region of the defective product image, at which at least a part of the pseudo shape overlaps with a position of the defect.

8. The visual inspection device according to claim 7, wherein the at least one pseudo image is generated by arranging the pseudo shape at a plurality of points in the position of the defect.

9. A method of generating a visual inspection discriminator for discriminating between a non-defective product and a defective product by inspecting a surface of an object to be inspected, the method comprising the steps of:
generating, based on a defective product image which includes a defect and which is to be determined as a defective product in visual inspection, at least one pseudo image which is close to a determination criterion between defective products and non-defective products in the visual inspection; and
obtaining the visual inspection discriminator for discriminating whether the object to be inspected is a non-defective product based on an inspection image obtained by photographing the object to be inspected, by performing machine learning of a boundary between non-defective products and defective products through use of a pair of the defect image and the at least one pseudo image or a pair of two pseudo images.
